# FASCICULE DE BREVET EUROPEEN

(11) **EP 0 968 865 B1**
(45) Date de publication et mention de la délivrance du brevet: **25.02.2004**
(21) Numéro de dépôt: 99401662.4
(22) Date de dépôt: 02.07.1999
(51) Int. Cl.: B60K 1/00

(54) **Agencement pour un groupe motopropulseur électrique**
Anordnung für ein elektrisches Antriebsaggregat
Arrangement of an electrical drive unit

(30) Priorité: 03.07.1998 FR 9808511
(43) Date de publication de la demande: 05.01.2000
(73) Titulaire: Renault s.a.s., 92100 Boulogne Billancourt (FR)
(72) Inventeur: Lehongre, Claude, 75014 Paris (FR)

(56) Documents cités:
- EP-A- 0 834 674
- DE-A- 4 417 432

## Description

L'invention concerne un agencement pour un groupe motopropulseur dans le compartiment moteur d'un véhicule automobile.

L'invention concerne plus particulièrement un agencement pour un groupe motopropulseur dans le compartiment moteur d'un véhicule automobile, du type qui comporte un moteur électrique qui est lié en rotation à une transmission pour entraîner en rotation des roues du véhicule, du type qui comporte un boîtier électronique contenant un circuit électronique de commande du fonctionnement du moteur électrique, et du type dans lequel le groupe motopropulseur est fixé au compartiment moteur par au moins deux supports.

On connaît de nombreux types d'agencement de groupes motopropulseur dans le compartiment moteur d'un véhicule automobile.

Conventionnellement, la majorité des véhicules sont des véhicules à traction avant possédant une implantation transversale du groupe motopropulseur. Outre la réduction de longueur du compartiment moteur qu'autorise cette disposition par rapport à une implantation longitudinale du groupe motopropulseur, cette implantation facilite aussi la fixation du groupe motopropulseur à l'intérieur du compartiment moteur.

En effet, dans un tel type d'implantation, l'ensemble constitué du moteur et de la boîte de vitesses est conventionnellement fixé à chacune de ses extrémités par des blocs amortisseurs sur les parois latérales du compartiment moteur, qui sont des zones de grande rigidité puisqu'elles participent à la rigidité de la structure de caisse et sont conçues pour supporter les efforts que le train avant du véhicule transmet à la caisse. Ces parois latérales comportent notamment les points de fixations des jambes de suspension avant.

Le groupe motopropulseur est donc conventionnellement fixé à ses deux extrémités au voisinage des points de fixations des jambes de suspension avant, ce qui permet, lors de la conception du véhicule, de réaliser une traverse plus légère reliant les deux parois latérales, que si elle était dévolue à participer au soutien du groupe motopropulseur.

De plus, les blocs amortisseurs qui soutiennent le groupe motopropulseur sont généralement alignés dans un même plan vertical qui contient sensiblement l'axe de rotation du moteur, ce qui permet d'amortir les effets de couple transmis par le moteur à la caisse du véhicule lors des accélérations et/ou décélérations brutales.

Un problème se pose lors de l'adaptation d'un groupe motopropulseur électrique dans un véhicule initialement conçu pour un groupe motopropulseur thermique, comme il est par exemple décrit dans le document US-A-5.403.244.

En effet, un tel groupe motopropulseur comporte, à puissance équivalente, un moteur électrique qui est sensiblement plus petit qu'un moteur thermique de même puissance, ce qui conduit à modifier notablement les points de fixation du moteur électrique par rapport à la caisse, laissant alors inutilisés les points d'ancrage sur caisse initialement prévus pour le moteur thermique.

De plus, un moteur électrique étant nécessairement commandé par un boîtier électronique de commande, il est nécessaire de trouver un emplacement pour celui-ci. La publication DE 4417432présente un ensemble d'entraînement dans lequel l'assemblage du moteur électrique et du boîtier de commande ne répond pas à la nécessité de laisser une place importante dévolue aux batteries du véhicule.

Ce document décrit un agencement selon le préambule de la revendication 1.

Pour remédier à ces inconvénients, l'invention propose un agencement de groupe motopropulseur électrique dans le compartiment moteur d'un véhicule automobile, qui permet d'utiliser les points de fixation du moteur thermique pour la fixation du moteur électrique, pour amortir les effets de couple du moteur, tout en présentant un encombrement optimal.

Dans ce but, l'invention propose un agencement pour un groupe motopropulseur dans le compartiment moteur d'un véhicule automobile, du type précédemment décrit, caractérisé en ce que le boîtier électronique est assemblé au moteur électrique et comporte au moins un premier support de fixation du groupe motopropulseur au compartiment moteur.

Selon d'autres caractéristiques de l'invention :
- le boîtier électronique est assemblé à une extrémité axiale du moteur électrique et il comporte une partie supérieure destinée à la fixation du premier support ;
- le boîtier électronique est sensiblement parallélépipédique et comporte un caisson, qui est d'un côté assemblé au moteur électrique, et qui est, du côté opposé, fermé par un couvercle, le caisson comportant la partie supérieure horizontale de fixation du premier support ;
- le caisson comporte, du côté du moteur électrique, une face verticale extérieure, qui comporte des nervures pour assurer le refroidissement et la rigidité du caisson, et qui comporte des points d'assemblage avec le moteur électrique ;
- les points d'assemblage de la face verticale extérieure comportent, dans une zone supérieure de la face verticale extérieure, un taraudage destiné à recevoir une vis portée par le moteur électrique, et dans une zone inférieure de la face verticale extérieure, deux pattes de fixation qui sont destinées à porter deux vis vissées dans un carter du moteur électrique ;
- le caisson et le couvercle sont tous deux réalisés par moulage et sont assemblés ensemble par des vis ;
- la transmission est agencée à une extrémité axiale du moteur électrique qui est opposée à celle à laquelle est assemblé le boîtier électronique ;
- le groupe motopropulseur est monté dans le compartiment moteur, transversalement par rapport à une direction longitudinale du véhicule , et est suspendu par les supports, un deuxième support étant fixé sur le carter de la transmission ;
- les supports sont alignés dans un plan vertical contenant l'axe de rotation du moteur électrique, de manière à autoriser des oscillations du groupe motopropulseur lorsqu'il fournit un couple important
- les supports sont constitués par des blocs amortisseurs en matériau élastomère recouverts par des coiffes réalisées par moulage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de face d'un véhicule automobile comportant un groupe motopropulseur selon l'invention,
- la figure 2 est une vue en perspective d'un groupe motopropulseur selon l'invention et de son agencement dans le compartiment moteur d'un véhicule automobile,
- la figure 3 est une vue de dessus d'un groupe motopropulseur selon la figure 2.

Dans la description qui va suivre, des chiffres de référence identiques désignent des pièces identiques ou ayant des fonctions similaires.

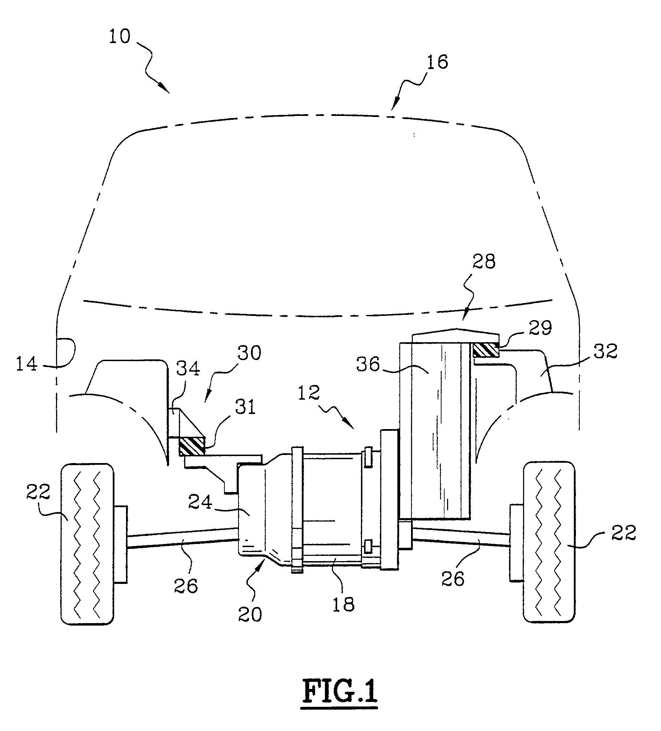

On voit sur la figure 1 une représentation schématique d'un agencement 10 d'un groupe motopropulseur 12 dans le compartiment 14 d'un véhicule automobile 16.

De manière connue, le véhicule automobile 16 est un véhicule dont le groupe motopropulseur 12 est implanté transversalement à l'intérieur du le compartiment moteur 14.

Comme c'est le cas pour la majorité des véhicules actuels, il peut s'agir notamment d'un véhicule à traction avant, le groupe motopropulseur 12 étant implanté dans le compartiment moteur 14 situé à l'avant du véhicule.

Le groupe motopropulseur 12 est un groupe motopropulseur électrique qui comporte un moteur électrique 18, qui est lié en rotation à une transmission 20 pour entraîner en rotation des roues 22 du véhicule 16. La transmission 20 peut, par exemple, être constituée d'un dispositif de réduction quelconque, et notamment d'une boîte de vitesses 24 qui entraîne les roues 22 par l'intermédiaire d'un différentiel (non représenté) et d'arbres de roue 26.

De manière connue, le groupe motopropulseur 12 est agencé transversalement dans le compartiment moteur 14 du véhicule automobile 16, et il est fixé au compartiment moteur 14 par au moins deux supports 28 et 30. Les deux supports 28 et 30 peuvent, comme c'est le cas pour le mode de réalisation représenté, être contenus dans un plan vertical perpendiculaire à la direction longitudinale du véhicule 16.

Plus précisément, les supports 28 et 30 sont alignés dans un plan vertical qui contient l'axe de rotation du moteur électrique 18, de sorte que, lorsque le groupe motopropulseur 12 est soumis à des effets de couple de la transmission 24, qui peuvent par exemple survenir lorsque le conducteur du véhicule 16 commande au véhicule une forte accélération ou une forte décélération, les supports 28 et 30 permettent d'amortir ces effets de couple et de limiter la transmission de ces efforts à la caisse du véhicule (non représentée), dont le compartiment moteur 14 fait partie.

Conventionnellement, et comme représenté à la figure 1, les supports 28 et 30 comportent des blocs amortisseurs 29 et 31 en matériau élastomère qui sont interposés entre un élément de fixation du groupe motopropulseur 12 et un élément de structure du compartiment moteur 14 du véhicule. Dans le cas présent et de manière non restrictive de l'invention, les supports 28 et 30 sont agencés sur des platines 32 et 34 situées à proximité de coupelles de jambes de suspension (non représentées) du véhicule 16, les platines 32 et 34 étant des zones particulièrement rigides du compartiment moteur 14.

De manière connue, le moteur électrique 18 est commandé par un circuit électronique de commande (non représenté) qui est disposé dans un boîtier électronique 36.

Conformément à l'invention, le boîtier électronique 36 est assemblé au moteur électrique 18 et comporte le support 28, ou premier support 28, de fixation du groupe motopropulseur 12 au compartiment moteur 14 du véhicule 16. Le bloc amortisseur 29 du premier support 28 du groupe motopropulseur est interposé entre le boîtier électronique 36 et la première platine 32 du compartiment moteur 14 du véhicule 16. Le bloc amortisseur 31 du deuxième support 30 est, quant à lui, interposé entre la boîte de vitesses 24 de la transmission 20 et la deuxième platine 34 du compartiment moteur 14 du véhicule.

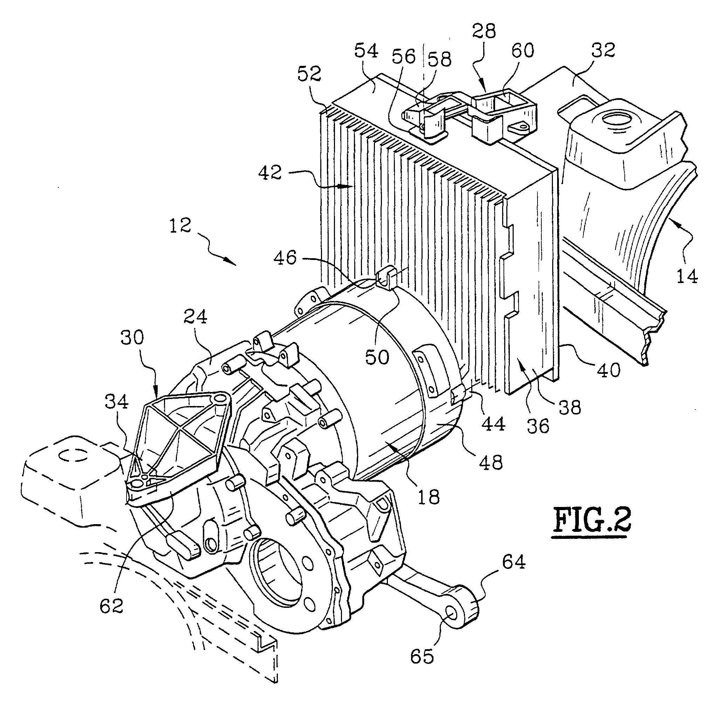

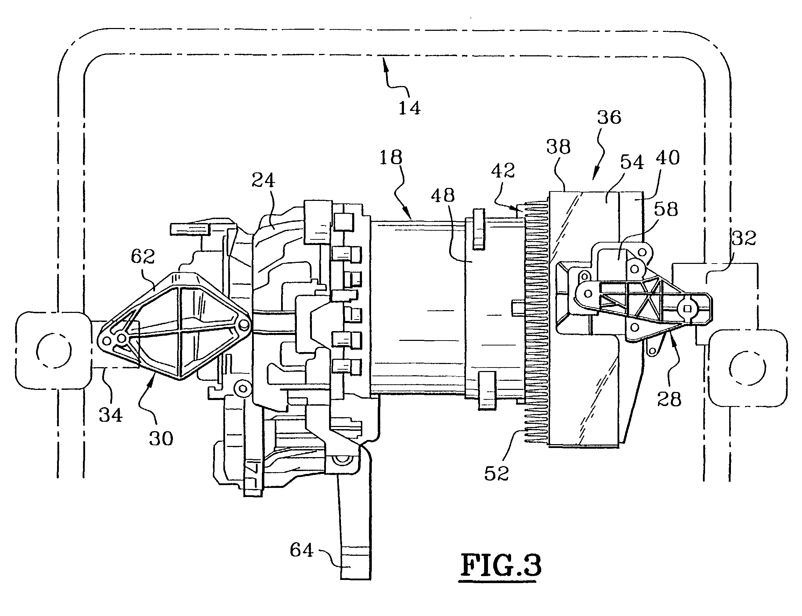

Les figures 2 et 3 illustrent le détail d'agencement du groupe motopropulseur 12 dans le compartiment moteur 14 du véhicule 16.

Conformément à l'invention, le groupe motopropulseur 12 est agencé transversalement dans le compartiment moteur 14 du véhicule et il est fixé au compartiment moteur par le premier support 28 et le deuxième support 30. Le boîtier électronique 36 est un boîtier sensiblement parallélépipédique qui est assemblé à une extrémité axiale du moteur électrique 18 qui est opposée à la boîte de vitesses 24 du groupe motopropulseur 12. Le boîtier électronique 36 comporte un caisson parallélépipédique creux 38 qui est d'un côté assemblé au moteur électrique 18 et, de l'autre côté, fermé par un couvercle 40 de sorte que le circuit électronique de commande du fonctionnement du moteur électrique 18 peut être enfermé à l'intérieur du boîtier électronique 36. L'assemblage du caisson 38 au moteur électrique 18 est réalisé par l'intermédiaire d'une face verticale extérieure 42 du boîtier électronique 36, qui comporte, comme on peut le voir plus particulièrement sur la figure 2, des points d'assemblage inférieurs 44 et supérieur 46 avec le moteur électrique 18.

Avantageusement, les points d'assemblage inférieurs 44 sont des pattes qui sont situées dans une zone inférieure du caisson 38 et qui sont destinées à porter deux vis vissées dans un carter 48 du moteur électrique 18. Les deux pattes 44 sont alignées horizontalement et leur entraxe est tel qu'il permet une fixation à la périphérie du carter cylindrique 48 pour garantir un meilleur assemblage du boîtier électronique 36 au moteur électrique 18. Le point d'assemblage supérieur 46 de la face verticale extérieure 42 du boîtier électronique 36 est un taraudage qui est destiné à recevoir une vis portée par un cavalier 50 du moteur électrique 18, qui est réalisé sous la forme d'une fourche en U réalisée venue de matière avec le carter 48. Avantageusement, le cavalier 50 est agencé lui aussi à la périphérie du carter 48 du moteur électrique 18, de sorte que, dans le plan vertical de la face verticale extérieure 42 du caisson 38, les trois points d'assemblage formés par les pattes 44 et le taraudage 46 sont sensiblement disposés à 120° les uns des autres par rapport à l'axe de rotation du moteur électrique sur le carter cylindrique 48.

La face verticale extérieure 42 du caisson 38 est munie de nervures 52 qui sont destinées d'une part à favoriser les échanges thermiques entre l'air ambiant et le caisson 38 pour refroidir le circuit électronique de commande (non représenté) du moteur électrique 18, et d'autre part à rigidifier le caisson 38.

De plus, pour assurer une parfaite rigidité du boîtier électronique 36, nécessaire à une bonne tenue mécanique du groupe motopropulseur 12 dans le compartiment moteur 14 du véhicule, le boîtier électronique 36, c'est-à-dire le caisson 38 et le couvercle 40, est réalisé par un procédé de moulage, ce qui permet de le doter aussi de nervures internes (non représentées) qui sont destinées à parfaire sa rigidité et garantir ainsi une bonne résistance à la torsion du caisson 38 et du couvercle 40 lorsque le groupe motopropulseur 12 est soumis à des couples importants.

Sur une face supérieure horizontale 54 du caisson 38, est agencée une partie supérieure 56, visible sur la figure 2, et qui est destinée à la fixation du premier support 28. La partie supérieure 56 peut, par exemple, comporter des taraudages ou des pattes de fixation afin de recevoir des vis (non représentées) noyées dans le matériau élastomère (non représenté) du bloc amortisseur 29 du support 28. Le bloc amortisseur 29 en matériau élastomère du support 28 est recouvert d'une coiffe 58 dont un bras 60 s'étend transversalement vers l'extérieur pour permettre la fixation du premier support 28 du groupe motopropulseur 12 sur le premier support 32 du compartiment moteur 14. Avantageusement, la patte transversale 60 comporte, par exemple, des moyens de fixation par vis à la première platine 32 du compartiment moteur 14.

D'une façon analogue, la boîte de vitesses 24 comporte des moyens de fixation (non représentés) au bloc amortisseur 31 du deuxième support 30, qui est lui aussi en matériau élastomère, et qui est recouvert d'une coiffe 62 destinée à permettre la fixation du deuxième support 30 du groupe motopropulseur 12 sur la deuxième platine 34 du compartiment moteur 14. Avantageusement, les premières platines 32 et deuxième platine 34 du compartiment moteur 14 sont des supports de jambes de force de suspension (non représentées) du véhicule 16.

Par ailleurs, la boîte de vitesses 24 comporte avantageusement un bras de fixation arrière 64 qui s'étend longitudinalement vers l'arrière de la boîte de vitesses 24 pour permettre la fixation du groupe motopropulseur 12 par l'intermédiaire d'un troisième point de fixation et garantir ainsi une parfaite stabilité du groupe motopropulseur 12. Le bras de fixation arrière 64 peut par exemple être boulonné sur un cavalier (non représenté) d'un tablier (non représenté) du compartiment moteur 14, par l'intermédiaire d'une vis traversant un trou de fixation 65 du bras 64, représenté à la figure 2.

Le couvercle 40 de fermeture du caisson 38 du boîtier électronique 16 est agencé en retrait transversal vers l'extérieur par rapport à la partie supérieure 56 de fixation de premier support 28 sur la face horizontale supérieure 54 du caisson 38, et il est rendu solidaire du caisson 38 par des moyens de fixation tels que des vis. Il est ainsi possible de démonter le couvercle 40, par exemple en le faisant glisser verticalement entre le caisson 38 et le premier support 32, sans pour autant déposer l'ensemble du groupe motopropulseur 12. Ceci permet avantageusement de faciliter les interventions dans le circuit électronique de commande de fonctionnement du moteur électrique 18.

Avantageusement, le matériau utilisé pour la réalisation du boîtier électronique 36 est, dans le mode de réalisation préféré de l'invention, un alliage d'aluminium ou du magnésium coulé sous pression.

D'une façon analogue, les coiffes respectives 58 et 62 des premier supports 28 et deuxième supports 30 du groupe motopropulseur 12 sont elles aussi réalisées par moulage d'un alliage d'aluminium ou de magnésium afin de garantir une bonne tenue mécanique des premier et deuxième supports 28 et 30.

Ce procédé de fabrication n'est pas restrictif de l'invention, et les coiffes 58 et 62 peuvent être réalisées par emboutissage d'une tôle d'acier d'épaisseur adéquate, comme c'est le cas pour la majorité des coiffes utilisées conventionnellement dans l'industrie automobile.

## Revendications

1. Agencement (10) pour un groupe motopropulseur (12) dans le compartiment moteur (14) d'un véhicule automobile (16), du type qui comporte un moteur électrique (18) qui est lié en rotation à une transmission (20) pour entraîner en rotation des roues (22) du véhicule (16), du type qui comporte un boîtier électronique (36) assemblé au moteur électrique (18) et contenant un circuit électronique de commande du fonctionnement du moteur électrique (18), et du type dans lequel le groupe motopropulseur (12) est fixé au compartiment moteur (14) par au moins deux supports (28, 30),
**caractérisé en ce que** le boîtier électronique (36) comporte au moins un premier support (28) de fixation du groupe motopropulseur (12) au compartiment moteur (14).

2. Agencement (10) selon la revendication 1, **caractérisé en ce que** le boîtier électronique (36) est assemblé à une extrémité axiale du moteur électrique (18) et **en ce qu'**il comporte une partie supérieure (56) destinée à la fixation du premier support (28).

3. Agencement (10) selon la revendication 2, **caractérisé en ce que** le boîtier électronique (36) est sensiblement parallélépipédique et comporte un caisson (38), qui est d'un côté assemblé au moteur électrique (18), et qui est, du côté opposé, fermé par un couvercle (40), et **en ce que** le caisson (38) comporte la partie supérieure (56), horizontale, de fixation du premier support (28).

4. Agencement (10) selon la revendication 3, **caractérisé en ce que** le caisson (38) comporte, du côté du moteur électrique, une face verticale extérieure (42), qui comporte des nervures (52) pour assurer le refroidissement et la rigidité du caisson (38), et qui comporte des points d'assemblage (44, 46) avec le moteur électrique (18).

5. Agencement (10) selon la revendication 4, **caractérisé en ce que** les points d'assemblage (44, 46) de la face verticale extérieure (42) comportent, dans une zone supérieure de la face verticale extérieure (42), un taraudage (46) destiné à recevoir une vis portée par le moteur électrique (18), et dans une zone inférieure de la face verticale extérieure, deux pattes (44) de fixation qui sont destinées à porter deux vis vissées dans un carter (48) du moteur électrique (18).

6. Agencement (10) selon l'une quelconque des revendications 3 à 5, **caractérisé en ce que** le caisson (38) et le couvercle (40) sont tous deux réalisés par moulage et sont assemblés ensemble par des vis.

7. Agencement (10) selon l'une quelconque des revendications 3 à 6, **caractérisé en ce que** la transmission (20) est agencée à une extrémité axiale du moteur électrique (18) qui est opposée à celle à laquelle est assemblé le boîtier électronique (36).

8. Agencement (10) selon la revendication 7, **caractérisé en ce que** le groupe motopropulseur (12) est monté dans le compartiment moteur (14), transversalement par rapport à une direction longitudinale du véhicule (16), et est suspendu par les supports (28, 30), un deuxième support (30) étant fixé sur le carter de la transmission (20).

9. Agencement (10) selon l'une quelconque des revendications précédentes, **caractérisé en ce que** les supports (28, 30) sont alignés dans un plan vertical contenant l'axe de rotation du moteur électrique (18), de manière à autoriser des oscillations du groupe motopropulseur (12) lorsqu'il fournit un couple important.

10. Agencement (10) selon l'une quelconque des revendications précédentes, **caractérisé en ce que** les supports (28, 30) sont constitués par des blocs amortisseurs en matériau élastomère (29, 31) recouverts par des coiffes (58, 62) réalisées par moulage.

## Claims

1. An arrangement (10) for a power unit (12) in the motor compartment (14) of a motor vehicle (16), of the type which comprises an electric motor (18) which is connected for rotational movement to a transmission (20) for driving in rotation the wheels (22) of the vehicle (16), of the type which comprises an electronic box (36) mounted to the electric motor (18) and containing an electronic circuit for controlling operation of the electric motor (18), and of the type in which the power unit (12) is fixed to the motor compartment (14) by at least two supports (28, 30),
**characterised in that** the electronic box (36) comprises at least one first support (28) for fixing the power unit (12) to the motor compartment (14).

2. An arrangement (10) according to claim 1 **characterised in that** the electronic box (36) is mounted to an axial end of the electric motor (18) and that it comprises an upper portion (56) intended for fixing of the first support (28).

3. An arrangement (10) according to claim 2 **characterised in that** the electronic box (36) is substantially parallelepipedic and comprises a case (38) which on one side is mounted to the electric motor (18) and which on the other side is closed by a cover (40) and that the case (38) comprises the upper horizontal portion (56) for fixing of the first support (28).

4. An arrangement (10) according to claim 3 **characterised in that** on the side of the electric motor the case (38) comprises a vertical external face (42) which comprises ribs (52) to ensure cooling and rigidity of the case (38) and which comprises mounting points (44, 46) for mounting to the electric motor (18).

5. An arrangement (10) according to claim 4 **characterised in that** the mounting points (44, 46) of the vertical external face (42) comprise in an upper zone of the vertical external face (42) a screwthread (46) intended to receive a screw carried by the electric motor (18) and in a lower zone of the vertical external face two fixing lugs (44) which are intended to carry two screws screwed into a housing (48) of the electric motor (18).

6. An arrangement (10) according to any one of claims 3 to 5 **characterised in that** the case (38) and the cover (40) are both produced by moulding and are fitted together by screws.

7. An arrangement (10) according to any one of claims 3 to 6 **characterised in that** the transmission (20) is arranged at an axial end of the electric motor (18), which is opposite to that to which the electronic box (36) is mounted.

8. An arrangement (10) according to claim 7 **characterised in that** the power unit (12) is mounted in the motor compartment (14) transversely with respect to a longitudinal direction of the vehicle (16) and is suspended by the supports (28, 30), a second support (30) being fixed on the housing of the transmission (20).

9. An arrangement (10) according to any one of the preceding claims **characterised in that** the supports (28, 30) are aligned in a vertical plane containing the axis of rotation of the electric motor (18) in such a way as to permit oscillations of the power unit (12) when it is producing a substantial amount of torque.

10. An arrangement (10) according to any one of the preceding claims **characterised in that** the supports (28, 30) are formed by damper blocks of elastomer material (29, 30) covered by caps (58, 62) produced by moulding.

## Patentansprüche

1. Anordnung (10) einer Antriebsgruppe (12) im Motorraum (14) eines Kraftfahrzeuges (16), die einen Elektromotor (18) aufweist, der drehfest mit einem Getriebe (20) verbunden ist zum Drehantrieb der Räder (22) des Fahrzeuges (16) und die eine elektronische Steuereinheit (36) aufweist, die mit dem Elektromotor (18) zusammengebaut ist und die eine elektronische Steuerschaltung für die Steuerung des Betriebs des Elektromotors (18) aufweist und wobei die Antriebsgruppe (12) im Motorraum (14) des Fahrzeuges über mindestens zwei Halterungen (28, 30) befestigt ist, **dadurch gekennzeichnet, dass** die elektronische Steuereinheit (36) wenigstens eine erste Halterung (28) zur Befestigung der Antriebsgruppe (12) im Motorraum (14) aufweist.

2. Anordnung (10) nach Anspruch 1, **dadurch gekennzeichnet, dass** die elektronische Steuereinheit (36) mit einem axialen Ende des Elektromotors (18) zusammengebaut ist und dass sie ein oberes Teil (56) aufweist, das der Befestigung der ersten Halterung (28) dient.

3. Anordnung (10) nach Anspruch 2, **dadurch gekennzeichnet, dass** die elektronische Steuereinheit (36) im wesentlichen parallelepipedförmig ist und ein Gehäuse (38) aufweist, dessen eine Seite mit dem Elektromotor (18) zusammengebaut ist und dessen gegenüber liegende Seite durch einen Deckel (40) verschlossen ist und dass das Gehäuse (38) das waagrechte obere Teil (56) für die Befestigung der ersten Halterung (28) enthält.

4. Anordnung (10) nach Anspruch 3, **dadurch gekennzeichnet, dass** das Gehäuse (38) eine dem Elektromotor (18) zugewandte senkrechte Außenwand (42) aufweist, die mit Rippen (52) zur Kühlung und zur Erhöhung der Steifigkeit des Gehäuses (38) versehen ist, wobei sie Stellen (44, 46) für den Zusammenbau mit dem Elektromotor (18) aufweist.

5. Anordnung (10) nach Anspruch 4, **dadurch gekennzeichnet, dass** die Stellen (44, 46) des Zusammenbaus der senkrechten Außenwand (42) im oberen Bereich der senkrechten Außenwand (42) ein Gewinde (46) aufweisen, das zur Aufnahme einer vom Elektromotor (18) getragenen Schraube dient und im unteren Bereich der senkrechten Außenwand zwei Befestigungslaschen (44) aufweist, die zwei Schrauben aufnehmen, die in das Gehäuse (48) des Elektromotors (18) eingreifen.

6. Anordnung (10) nach einem der Ansprüche 3 bis 5, **dadurch gekennzeichnet, dass** sowohl das Gehäuse (38) als auch der Deckel (40) durch ein Gießverfahren hergestellt sind und über Schrauben miteinander verbunden sind.

7. Anordnung (10) nach einem der Ansprüche 3 bis 6, **dadurch gekennzeichnet, dass** das Getriebe (20) an demjenigen axialen Ende des Elektromotors (18) angeordnet ist, das demjenigen gegenüber liegt, das mit der elektronischen Steuereinheit (36) zusammengebaut ist.

8. Anordnung (10) nach Anspruch 7, **dadurch gekennzeichnet, dass** die Antriebsgruppe (12) quer bezüglich der Längsrichtung des Fahrzeuges (16) im Motorraum (14) eingebaut ist und dass sie an zwei Halterungen (28, 30) aufgehängt ist, wobei die zweite Halterung (30) am Gehäuse des Getriebes (20) befestigt ist.

9. Anordnung (10) nach einem der vorhergehenden Ansprüche, **dadurch gekennzeichnet, dass** die Halterungen (28, 30) in einer senkrechten Ebene angeordnet sind, in der die Drehachse des Elektromotors (18) liegt, sodass Schwingungen der Antriebsgruppe (12) bei Auftreten von erheblichen Momenten gedämpft werden.

10. Anordnung (10) nach einem der vorhergehenden Ansprüche, **dadurch gekennzeichnet, dass** die Halterungen (28, 30) aus Elastomerblöcken (29, 31) zur Schwingungsdämpfung bestehen, die von Rahmen (58, 62) umgeben sind, die durch ein Gießverfahren hergestellt sind.
